(19) **Europäisches Patentamt**

**European Patent Office**

**Office européen des brevets**

(11) **EP 0 597 481 B1**

(12) **EUROPEAN PATENT SPECIFICATION**

(45) Date of publication and mention
of the grant of the patent:
**17.10.2001 Bulletin 2001/42**

(51) Int Cl.⁷: **H04L 9/32**

(21) Application number: **93118309.9**

(22) Date of filing: **11.11.1993**

(54) **Efficient signature schemes based on birational permutations**

Auf birationalen Permutationen beruhende leistungsfähige Unterschriftverfahren

Schéma efficaces de signature basés sur des permutations birationelles

(84) Designated Contracting States:
**AT BE CH DE DK ES FR GB GR IE IT LI LU MC NL PT SE**

(30) Priority: **13.11.1992 US 974751**
**19.04.1993 US 47420**

(43) Date of publication of application:
**18.05.1994 Bulletin 1994/20**

(73) Proprietor: **YEDA RESEARCH AND DEVELOPMENT CO., Ltd.**
**Rehovot 76 110 (IL)**

(72) Inventor: **Shamir, Adi**
**Rehovot (IL)**

(74) Representative: **Laufhütte, Dieter, Dr.-Ing. et al**
**Lorenz-Seidler-Gossel**
**Widenmayerstrasse 23**
**80538 München (DE)**

(56) References cited:
- **ADVANCES IN CRYPTOLOGY-CRYPTO '93, 22 August 1993, BERLIN (DE) pages 1 - 11 A. SHAMIR 'EFFICIENT SIGNATURE SCHEMES BASED ON BIRATIONAL PERMUTATIONS'**
- **SYSTEMS & COMPUTERS IN JAPAN, vol.19, no.2, February 1988, NEW YORK US pages 10 - 18 S. TSUJII ET AL. 'A PUBLIC-KEY CRYPTOSYSTEM BASED ON THE DIFFICULTY OF SOLVING A SYSTEM OF NONLINEAR EQUATIONS'**
- **PROCEEDINGS OF CRYPTO '85, 18 August 1985, BERLIN (DE) pages 340 - 349 H. FELL ET AL. 'ANALYSIS OF A PUBLIC KEY APPROACH BASED ON POLYNOMIAL SUBSTITUTION'**

## Description

Field of Invention

The present invention relates to efficient signature schemes based on birational permutations and more particularly, relates to apparatus and method for carrying out same.

Background of Invention

The original proposal for public key cryptography (Diffie and Hellman [1976]) was based on the notion of trapdoor permutations, i.e., invertible functions which are easy to compute but apparently difficult to invert, unless some trapdoor information (which makes the inversion easy) is known. The best known implementation of this idea is the RSA scheme (Rivest, Shamir and Adleman [1978]), which can solve in a unified way the problems of key management, secure transmission, user identification, message authentication, and digital signatures. In one of the variants of this scheme, the encryption function is the low degree polynomial $f(x)=x^3$ (mod n) where n is the public product of two secret primes p and q. This function can be efficiently computed with two modular multiplications. Unfortunately, the inverse function $f^{-1}(x)=x^d$ (mod n) is a very high degree polynomial, and thus its evaluation is quite slow (especially in software implementations).

In spite of extensive research in the last 16 years, there had been no fundamentally new constructions of trapdoor permutations. To overcome this difficulty, researchers have developed specialized solutions to various cryptographic needs which are not based on this unifying notion. For example, Diffie and Hellman [1976] proposed a key management scheme which is based on the one way permutation of exponentiation modulo a prime. Since this function cannot be efficiently inverted, it is neither an encryption nor a signature scheme. The cryptosystem of Merkle and Hellman [1978] is invertible, but its mapping is not onto and thus it can not generate digital signatures. The Fiat-Shamir [1986] and DSS [1991] signature schemes are not one-to-one mappings, and thus they can not be used as cryptosystems.

A natural approach to the construction of efficient trapdoor permutations is to find low degree algebraic mappings (polynomials or rational functions) whose inverses are also low degree algebraic mappings. Such mappings are called birational functions. We are particularly interested in multivariate mappings $f(x_1,...,x_k)=(v_1,...,v_k)$ in which the $x_i$ and the $v_i$ are numbers modulo a large n=pq, since the solution of general algebraic equations of this type is at least as hard as the factorization of the modulus. In this context, we say that a polynomial is low degree if its degree is a constant which does not grow with n, and a rational function is low degree if it is the ratio of two low degree polynomials. For example, in the case of cubic RSA, the function is considered low degree, but its inverse is not. General algebraic mappings do not usually have unique inverses, when they do have inverses they usually cannot be written in closed form, and when the closed forms exist they are usually based on root extractions (radicals) or exponentiations whose computation modulo a large n is very slow. The construction of good birational mappings is thus a non-trivial task.

One attempt to construct birational permutations was reported in Fell and Diffie [1985]. It used the following DES-like idea:

Let $(x_1,x_2,...,x_k)$ be an initial k-vector of variables, and let $g(x_2,...,x_k)$ be a secret multivariate polynomial. Alternately replace the current k-vector of multivariate polynomials $(p_1,p_2,...,p_k)$ by $(p_1+g(p_2,...p_k),p_2,...,p_k)$, and rotate the k-vector to the right. After sufficiently many iterations, expand and publish the resultant k-vector of multivariate polynomials as your public key. The function f is evaluated on input $(a_1,a_2,...,a_k)$ by substituting the $a_i$'s into the $x_i$'s in the k published multivariate polynomials, and computing their values $(b_1,b_2,...,b_k)$. When the trapdoor information g is known, the inverse of f can be computed by undoing the transformations (i.e., by alternately subtracting $g(p_2,...,p_k)$ from $p_1$ and rotating the k-vector to the left). Unfortunately, even when g is a quadratic function, the number of terms can be squared in each iteration, and thus the size of the public key can grow double exponentially with the number of iterations, which cannot be too small for security reasons. As the authors themselves conclude, "there seems to be no way to build such a system that is both secure and has a public key of practical size".

Birational permutations cannot be used in a direct way as public key cryptosystems due to the following generic attack: If f is known, the cryptanalyst can prepare a large number of input-output pairs for this function. Since f is invertible, these pairs (in reverse order) can be used to interpolate the unknown low-degree function $f^{-1}$ by solving a small number of linear equations relating its coefficients. This attack discouraged the serious study of cryptographic birational permutations in the literature.

Summary of Invention

The invention describes a novel method and apparatus for using a birational permutation as a public key signature scheme and more particularly two novel families of public key signature schemes based on birational permutations. These and other objects of the present invention will become evident from the following description of preferred embodiments of the invention when taken in conjunction with the drawings.

## Description of Drawings

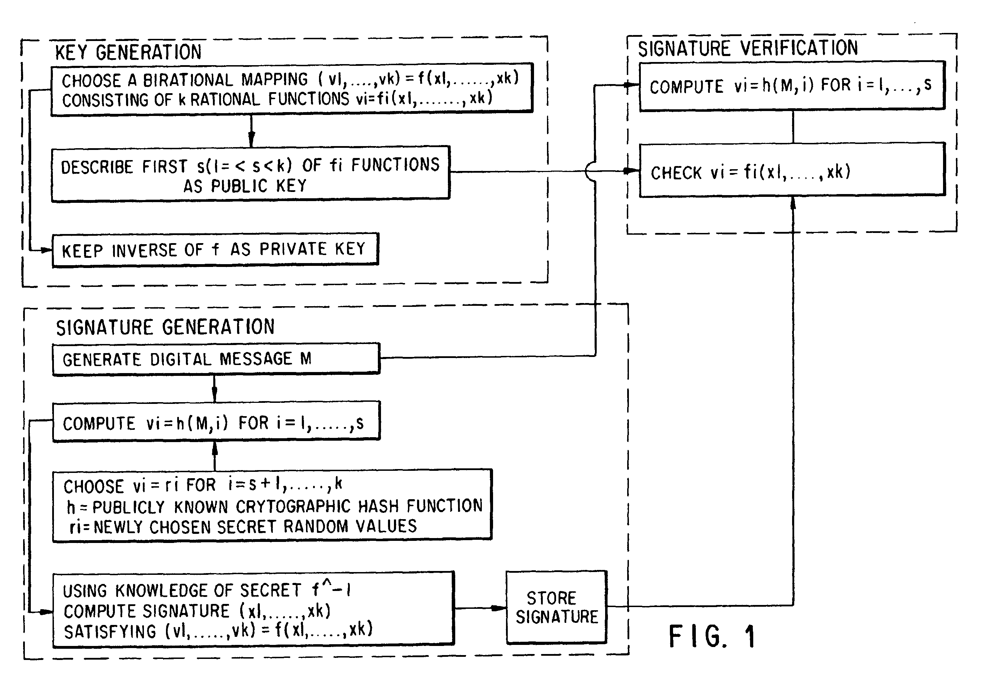

Figures 1, 2 and 3 of the drawings are schematic showings, in block diagram form, of the signature schemes of the present invention, in particular, showing key generation, signature generation and signature verification illustrating the method and apparatus of the general public key signature scheme and two particular implementations using algebraic bases and sequentially linearized equations.

## Detailed Description of a First Preferred Embodiment

Referring now to the drawing, the basic steps and structure of the method and apparatus of the present invention implementing the efficient signature scheme based on birational permutations will now be described in detail. The description will be by reference to the various steps of the novel method, however, the apparatus employed to effect the various step and to carry out the invention, will be evident as a means to carry out the prescribed function. Known data processing equipment and the manner of programming same to carry out the method, will be evident from the algorithms given and otherwise, to give effect to the present invention will be readily apparent to those of ordinary skill in this art from the following detailed elaboration of the invention.

With reference to Fig. 1 the key generation, signature generation and signature verification are carried out as follows:

## KEY GENERATION:

    1. Each user chooses a birational mapping $(v_1,...,v_k)=f(x_1,...,x_k)$ consisting of k>1 rational functions $v_i=f_i(x_i,...,x_k)$.
    2. Each user describes the first s $(1 \leq s < k)$ of these fi functions in his public key, and keeps the inverse of f as his private key.

## SIGNATURE GENERATION:

    1. Given a digital message M, the signer computes $v_i=h(M,i)$ for i=1,...,s and chooses $v_i=r_i$ for i=s+1,...,k, where h is a publicly known cryptographic hash function and $r_i$ are newly chosen secret random values.
    2. The signer uses his knowledge of the secret $f^{-1}$ to compute a signature $(x_1,...,x_k)$ satisfying $(v_1,...,v_k)=f(x_1,...,x_k)$. This signature is either stored or transmitted to the verifier along with M.

## SIGNATURE VERIFICATION:

1. The verifier computes $v_i=h(M,i)$ for i=1,...,s and checks that each $v_i$ satisfies $v_i=f_i(x_1,...,x_k)$ where the $f_i$'s are taken from the signer's public key.

The above scheme cannot be used as a public key cryptosystem, since the clear text $(x_1,...,x_k)$ cannot be uniquely recovered from the shorter ciphertext $(v_1,...,v_s)$.

The scheme can be used as a signature scheme, since there is no requirement that each message should have only one signature. The recommended choice of s is k-1, which makes the verification condition hardest to satisfy.

The cryptanalyst cannot interpolate $f^{-1}$ since it is not uniquely defined by the public key. He cannot generate by himself complete input-output pairs, and cannot use input-output pairs generated by the legitimate signer since each one of them is based on new unknown values $r_i$.

The security of this scheme depends on the choice of birational permutations. For example, linear birational permutations are insecure since the s simultaneous equations $v_1=f_i(x_1,...,x_k)$ for i=1,...,s can be easily solved even when the other k-s functions $f_{s+1},...,f_k$ are not specified. When the $f_i$ functions are non-linear, there are no general techniques for solving s equations in k unknowns, and the problem becomes particularly difficult when the equations are modulo a large public n with secret factorization n=pq.

In addition to this general scheme, two novel constructions of birational permutations are proposed.

The theory behind the first construction will now be explained. Let $F_d[y_1,y_2,...,y_k]$ denote the set of all the homogeneous polynomials of degree d in the k variables $y_1,y_2,...,y_k$. In particular consider the case of quadratic polynomials (d=2) whose general form is:

$$\Sigma i=1,...k \qquad \Sigma j=i,...,k \qquad a_{ij}\, y_i\, y_j$$

Any such polynomial can be viewed as a linear combination of the $k(k+1)/2$ elementary quadratics $y_i y_j$ for $i \le j$ with the coefficient vector $(a_{11}, a_{12},..., a_{kk})$. Any set of quadratics with this property is called a linear basis of $F_2[y_1,...,y_k]$.

By allowing the additional operations of multiplication and (remainder-free) division of polynomials, we can express some of the elementary quadratics by other elementary quadratics. For example, the standard linear basis of $F_2[y_1,y_2,y_3]$ is $\{y_1^2, y_2^2, y_3^2, y_1 y_2, y_1 y_3, y_2 y_3\}$. However, the first three elementary quadratics can be expressed by the last three in the following way: $Y_1^2 = (y_1 y_2)\,(y_1 y_3)\,/\,(y_2 y_3)$, $Y_2^2 = (y_1 y_2)\,(y_2 y_3)/(y_1 y_3)$, $y_3^2 = (y_1 y_3)(y_2 y_3)/(y_1 y_2)$.

We can thus reduce the six linear generators $\{y_1^2, y_2^2, y_3^2, y_1 y_2, y_1 y_3, y_2 y_3\}$ into the three algebraic generators $\{y_1 y_2, y_1 y_3, y_2 y_3\}$. Another triplet of algebraic generators is $\{y_1^2, y_1 y_2, y_2 y_3\}$. However, $\{y_1^2, y_2^2, y_2 y_3\}$ does not algebraically generate $F_2[y_1,y_2,y_3]$ since it cannot express $y_1 y_2$.

To formalize this notion, consider an arbitrary set G of polynomials over a ring R. The algebraic closure [G] of G is defined in the following way:

1. R and G belong to [G].
2. If f and g belong to [G], then f+g, f-g, fg also belong to [G].
3. If f and g=0 belong to [G] and g divides f (without remainder) then f/g also belongs to [G].

Note that [G] is not necessarily an ideal in the ring of polynomials over R, since arbitrary polynomials are not allowed as coefficients of the generators. For example, when $G=\{y^2\}$, [G] is the set of all the polynomials in y whose monomials have even degrees. Note further that root extractions (radicals) are not allowed as basic operations, since they cannot be carried out efficiently in some rings R.

A set G is called redundant if some $g_i$ in G belongs to $[G-\{g_i\}]$. A non-redundant set G is called an algebraic basis of F if F is contained in [G]. Note that [G] can contain additional polynomials. One can easily prove:

Theorem: 1. The set $\{y_1^2, y_1 y_2, y_2 y_3, ..., y_{k-1} y_k\}$ is an algebraic basis of $F_2[y_1,y_2,...,y_k]$ for any k. 2. the set $\{y_1 y_2, y_2 y_3, y_3 y_4, ..., y_k y_1\}$ is an algebraic basis of $F2[y_1,y_2,...y_k]$ for any odd k>1.

Proof: It can be shown that the specified sets can generate all the other elementary quadratics $y_i y_j$ for $i \le j$. Assume first that j-i is an odd number. Then one can use the telescoping formula:

$$y_i y_j = (y_i y_{i+1})\,(y_{i+2} y_{i+3)}\,...\,(y_{j-1} y_j)/(y_{i+1} y_{i+2})...(y_{j-2} y_{j-1}).$$

If j-i is an even number, this approach will yield $y_i/y_j$ instead of $y_i y_j$. To turn the former into the later, we have to multiply it by $y_j^2$. In case 1, $y_1^2$ is given as a generator, and one can turn each $y_t^2$ into $y_{t+1}^2$ by using the formula:

$$y_{t+1}^2 = (y_t y_{t+1})^2 / y_t^2.$$

In case 2, the fact is used that k is odd, and therefore the distance from j to j via the cyclic order $y_j, y_{j+1},...,y_k, y_1,...,y_j$ is odd. The telescoping formula will thus yield the desired $y_j^2$ if we cycle through all the variables $y_t$. Q.E.D.

The theorem gives two types of algebraic bases of size k for $F_2[y_1,y_2,...,y_k]$. To get other bases, we can use the following transformations:

Theorem: Let $G=\{g_1,...,g_k\}$ be an algebraic basis for $F_d\{y_1,...,y_k\}$, and let A and B be two kxk invertible linear transformations. Let G' be the result of applying A to the variables in G (i.e., replacing each $y_i$ by a linear combination of $y_j$'s), and let G" be the result of applying B to the generators in G' (i.e., replacing each $g'_i$ in G' by a linear combination of $g'_j$'s). Then G" is also an algebraic basis of $Fd[y_1,...,y_k]$.

Proof: Due to the invertible and algebraic nature of these transformations, it is easy to translate the representation of each f in the original basis G into a representation of f in the new bases G' and G". Q.E.D.

Example: Consider the algebraic basis $G=\{y_1 y_2, y_2 y_3, y_3 y_1\}$ of $F2[y_1,y_2,y_3]$, and the randomly chosen linear transformations:

```
          37 62 71                         41 73 51
A  =      89 45 68               B  =      89 12 60
          50 17 93                         37 94 19
```

Then the linear change of variables $y \leftarrow Ay$ (mod 101) changes the generators $g_i$ in G into:

$$g'_1 = (37y_1+62y_2+71y_3) \, (89y_1+45y_2+68y_3)$$

$$= 12y_1y_2+38y_2y_3+48y_3y_1+61y_1{}^2+63y_2{}^2+81y_3{}^2 \qquad \text{(mod 101)}$$

$$g'_2 = (89y_1+45y_2+68y_3) \, (50y_1+17y_2+93y_3)$$

$$= 26y_1y_2+89y_2y_3+62y_3y_1+ 6y_1{}^2+58y_2{}^2+62y_3{}^2 \qquad \text{(mod 101)}$$

$$g'_3 = (50y_1+17y_2+93y_3) \, (37y_1+62y_2+71y_3)$$

$$= 93y_1y_2+ 4y_2y_3+22y_3y_1+32y_1{}^2+44y_2{}^2+38y_3{}^2 \qquad \text{(mod 101)}$$

and the linear transformation $G'' \leftarrow BG'$ (mod 101) changes the generators $g'_i$ in G' into:

$$g''_1 = 41g'_1+73g'_2+51g'_3$$

$$= 63y_1y_2+78y_2y_3+41y_3y_1+26y_1{}^2+72y_2{}^2+89y_3{}^2 \qquad \text{(mod 101)}$$

$$g''_2 = 89g'_1+12g'_2+60g'_3$$

$$= 92y_1y_2+44y_2y_3+74y_3y_1+48y_1{}^2+55y_2{}^2+32y_3{}^2 \qquad \text{(mod 101)}$$

$$g''_3 = 37g'_1+94g'_2+19g'_3$$

$$= 9y_1y_2+51y_2y_3+43y_3y_1+96y_1{}^2+34y_2{}^2+53y_3{}^2 \qquad \text{(mod 101)}.$$

In the original basis G it was easy to find the representation of any given quadratic polynomial f as an algebraic expression in the $g_i$'s. In a transformed basis G'' it is less obvious how to find such a representation, even though its existence is guaranteed.

To simplify notation, assume without loss of generality that k is odd and G is always the symmetric basis $(y_iy_{i+1})$ (where i+1 is computed mod k). Given the invertible linear transformation $Y \leftarrow AY$, we define A&A as the k x k (k+1)/2 matrix whose i-th row represents the quadratic polynomial $y_iy_{i+1}$ after the change of variables. The coefficients of the final basis G'' can thus be compactly represented by the k x k(k+1)/2 matrix B*(A&A).

Assume now that one is given an arbitrary assignment of values $x_1,...,x_k$ to the elementary quadratics $y_1y_2$, $y_2y_3,..., y_ky_1$ in the standard basis of $F_2[y_2,...,y_k]$ (one can use the algebraic independence of these generators to make any such assignment consistent, without actually finding the values of the individual $y_i$'s). One can use the telescoping formulas to compute the values of all the k(k+1)/2 elementary quadratics $y_iy_j$ for $i \leq j$. Denote this extended version of X by E(X), and note that it increases the height of the column vector from k to k(k+1)/2. The values of the k generators in G'' for this assignment X can be computed by the matrix-vector product V=[B*(A&A)] [E(X)]. Note again the nonlinearity of this transformation, which is due to the quadratic computation of the coefficients of A&A from the coefficients of A, and the multiplications and divisions required to extend X into E(X).

This function maps the k-vector X into the k-vector V. The goal of the invention now is to invert this function and recover the original values in X when A and B are known. First, one can undo the effect of B by computing W=CV where $C=B^{-1}$, and obtain the relationship W=[A&A](E(X)). By definition, the values $w_i$ in W are the values of the generators $g'_i$ in the intermediate G'.

Since G' is an algebraic basis, it can represent any quadratic polynomial in $F_2[y_1,...,y_k]$ as an algebraic expression in the generators $g'_i$. In particular, it can represent the k elementary quadratics $y_iy_{i+1}$, and thus it can be recovered by evaluating an appropriate algebraic expression in the values $w_1, w_2,...,w_k$. It is easy to check that these algebraic expressions can be compactly represented as $X=[A^{-1}\&A^{-1}][E(W)]$.

Example (continued): Consider the algebraic bases G, G' and G'' of the previous example. Let $x_i$ denote the value of $y_iy_{i+1}$, i.e.:

$$y_1 y_2 = x_1 \qquad y_2 y_3 = x_2 \qquad y_3 y_1 = x_3 \qquad \text{(mod 101)}.$$

The values of the other three elementary quadratics can be expressed as:

$$y_1^2 = x_3 x_1/x_2 \quad y_2^2 = x_1 x_2/x_3 \quad y_3^2 = x_2 x_3/x_1 \qquad \text{(mod 101)}.$$

The values $v_1$ of the generators $g''_i$ can now be computed as $[B*(A\&A)][E(X)]$, i.e.:

$$v_1 = 63x_1 + 78x_2 + 41x_2 + 26x_3 3x_1/x_2 + 72x_1 x_2/x_3 + 89x_1 x_2/x_1 \qquad \text{(mod 101)}$$

$$v_2 = 92x_1 + 44x_2 + 74x_3 + 48x_3 x_1/x_2 + 55x_1 x_2/x_3 + 32x_2 x_3/x_1 \qquad \text{(mod 101)}$$

$$v_3 = 9x_1 + 51x_2 + 43x_3 + 96x_3 x_1/x_2 + 34x_1 x_2/x_3 + 53x_2 x_3/x_1 \qquad \text{(mod 101)}.$$

In particular, when the input is $x_1 = 1$, $x_2 = 2$, $x_3 = 3$, the output is $v_1 = 54$, $v_2 = 63$, $v_3 = 85$.

Consider now the problem of inverting this transformation: Given these values $v_1$, $v_2$, $v_3$, find $x_1$, $x_2$, $x_3$. First compute the matrix inverses:

$$A^{-1} = \begin{matrix} 35 & 86 & 19 \\ 5 & 78 & 13 \\ 40 & 72 & 20 \end{matrix} \qquad B^{-1} = \begin{matrix} 30 & 24 & 51 \\ 46 & 31 & 71 \\ 17 & 71 & 97 \end{matrix}$$

Next, reverse the transformation $G'' \leftarrow BG'$ (mod 101) by computing $W = [B^{-1}]V$ (mod 101). When $v_1 = 54$, $v_2 = 63$, $v_3 = 85$, this matrix-vector product yields $w_1 = 94$, $w_2 = 69$, $w_3 = 1$, which are the values of the intermediate generators $g'_1$, $g'_2$, $g'_3$. We then extend this W into $E(W) = (w_1, w_2, w_3, w_3 w_1/w_2, w_1 w_2/w_3, w_2 w_3/w_1)$, and compute $X = [A^{-1} \& A^{-1}][E(W)]$ (mod n), i.e.:

$$x_1 = 29w_1 + 75w_2 + 45w_3 + 74w_3 w_1/w_2 + 42w_1 w_2/w_3 + 45w_2 w_3/w_1 \qquad \text{(mod 101)}$$

$$x_2 = 46w_1 + 72w_2 + 14w_3 + 99w_3 w_1/w_2 + 61w_1 w_2/w_3 + 58w_2 w_3/w_1 \qquad \text{(mod 101)}$$

$$x_3 = 1w_1 + 58w_2 + 46w_3 + 87w_3 w_1/w_2 + 31w_1 w_2/w_3 + 77w_2 w_3/w_1 \qquad \text{(mod 101)}.$$

For $w_1 = 94$, $w_2 = 69$, $w_3 = 1$, the extension of W to $E(W)$ yields $(94, 69, 1, 16, 22, 19)$. When these values are substituted into the expressions above, one gets the original inputs $x_1 = 1$, $x_2 = 2$, $x_3 = 3$.

A simple optimization technique can substantially improve the performance of this scheme. If B is chosen as the inverse of some kxk submatrix of A&A, then $B*(A\&A)$ contains a kxk identity submatrix and there is no need to specify these $k^2$ numbers.

Example (continued): Assume that the same is used but choose a new B:

$$\text{A\&A} = \begin{array}{cccccc} 12 & 38 & 48 & 61 & 63 & 81 \\ 26 & 89 & 62 & 6 & 58 & 62 \\ 93 & 4 & 22 & 32 & 44 & 38 \end{array} \qquad B = \begin{array}{ccc} 89 & 16 & 42 \\ 14 & 13 & 34 \\ 63 & 14 & 13 \end{array}$$

$$\text{B*(A\&A)} = \begin{array}{cccccc} 37 & 25 & 27 & 1 & 0 & 0 \\ 32 & 7 & 4 & 0 & 1 & 0 \\ 6 & 56 & 37 & 0 & 0 & 1 \end{array}$$

The birational permutation is now simplified to:

$$v_1 = 37x_1 + 25x_2 + 27x_3 + x_3 x_1/x_2 \qquad \text{(mod 101)}$$

$$v_2 = 32x_1 + 7x_2 + 4x_3 + x_1 x_2/x_3 \qquad \text{(mod 101)}$$

$$v_3 = 6x_1 + 56x_2 + 37x_3 + x_2 x_3/x_1 \qquad \text{(mod 101)},$$

which has a shorter description and requires fewer arithmetic operations.

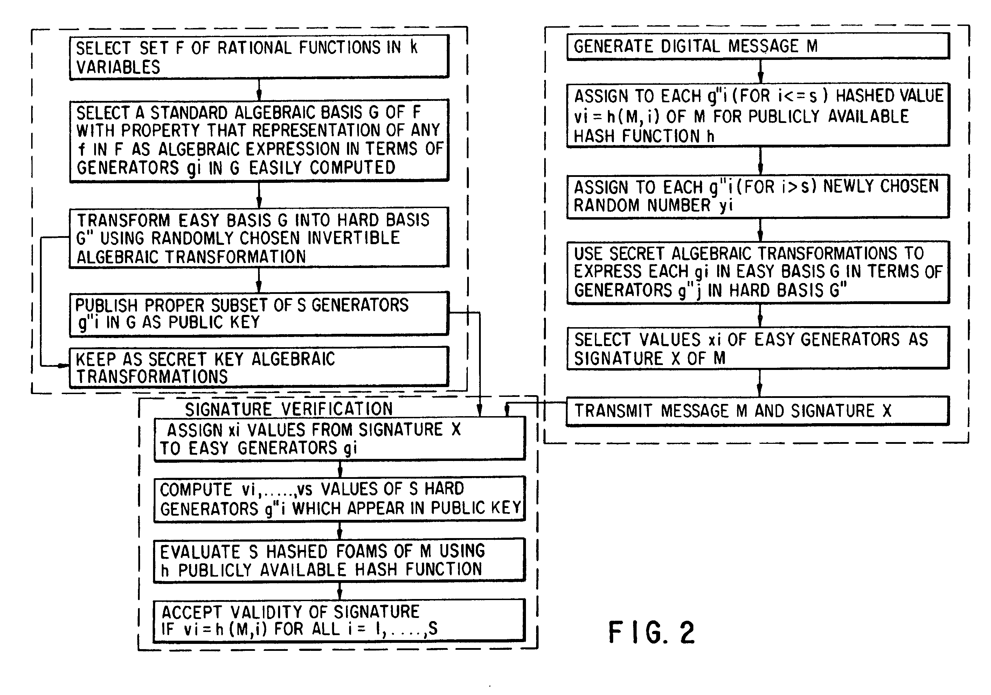

The formalization of the new implementation is described as follows with reference to Fig. 2:

KEY GENERATION:

1. Pick a set F of rational functions in k variables, and a standard algebraic basis G of F with the property that the representation of any f in F as an algebraic expression in terms of the generators $g_i$ in G can be easily computed.
2. Transform the easy basis G into a hard basis G" by using randomly chosen invertible algebraic transformations.
3. Publish a proper subset of s generators $g"_i$ in G" as the public key, and keep the algebraic transformations as the private key.

SIGNATURE GENERATION:

1. To sign a given message M, assign to each $g"_i$ with $i \leq s$ the hashed value $v_1 = H(M,i)$ of M, and to each $g"_i$ with $i > s$ a newly chosen random number $r_i$.
2. Use the secret algebraic transformations to express each $g_i$ in the easy basis G in terms of the generators $g"_j$ in the hard basis G". The values $x_i$ of the easy $g"_j$ form the signature X of M.

SIGNATURE VERIFICATION:

1. Assign the values $x_i$ from the signature X to the easy generators $g_i$, and compute the values $v_1,...,v_s$ of the s hard generators $g"_i$ which appear in the signer's public key.
2. Evaluate the s hashed forms of M under the publicly available hash function h.
3. Accept the validity of the signature if $v_1 = H(M,i)$ for all i=1,...,s.

The recommended choice for F is the set $F_d[y_1,...,y_k]$ of all the homogeneous polynomials of degree d over the ring $Z_n$. The modulus n can be chosen either universally by a trusted center, or individually by each signer (this eliminates the center, but increases the complexity of the key generation process). It is recommended to choose n as the product of two large primes p and q, but the factorization can be destroyed as soon as n is chosen and published. The recommended choice for G is some set of monomials $y_1^{e1} y_2^{e2}...y_k^{ek}$ with $e_1+e_2+...+e_k=d$ such that any other monomial in $F_d[y_1,...,y_k]$ can be generated by a sequence of multiplications and divisions. It is not difficult to show that for any d and k, $F_d[y_1,...,y_k]$ has an algebraic basis of this type which consists of exactly k monomials of degree d (for example, $G=\{y_1^3, y_2^2y_3, y_1y_2y_3\}$ is an algebraic basis for $F_3[y_1,y_2,y_3]$). The problem with large choices of k and d is that the number of coefficients in the published generators G" grows as $O(k^{(d+1)})$. However, for fixed d this key size grows only polynomially in k. The recommended bases for d=2 are the standard bases $G=\{y_1y_2,...,y_{k-1}y_k, y_ky_1\}$ for odd k and $G=\{y_1^2, y_1y_2,..., y_{k-1}y_k\}$ for arbitrary k, and the recommended choice of invertible algebraic transformations is a pair of randomly chosen kxk matrices A (which linearly transforms the variables) and B (which linearly transforms the equations).

A second novel signature scheme according to the present invention is based on sequentially linearized equations. According to the invention a system of k polynomial equations $E_i(x_1,...,x_k)=H_i(M)$ (mod n) is changed by a linear transformation Y=AX (mod n) (where X is the vector of k original $x_j$ variables, Y is a vector of k new variables $y_j$, and A is some invertible kxk matrix) into a system of polynomial equations of the form $F_i(y_1,...,y_i)$ in which $y_i$ occurs only linearly. Due to the triangular form of the resultant equations (in which the i-th equation contains only the first i variables), the user can sequentially solve them by substituting the already computed values of $y_1,...,y_{i-1}$ into $F_i$, and solving the resultant equation $F_i=H_i(M)$ (mod n) which is linear in the single remaining variable $y_i$. The computed Y solution can be translated back into the desired X solution via the inverse linear transformation $X=A^{-1}Y$ (mod n).

The actual key generation process is carried out in reverse order: The user first chooses the triangular polynomials $F_i(y_1,...,y_i)$ and the matrix A, and then transforms each $F_i$ into $E_i$ by replacing each $y_j$ variable with the linear combination of $x_j$ variables indicated by the A transformation.

To further complicate the task of the cryptanalyst, the user applies a secret kxk linear transformation B to the k polynomials $E_i$ (i.e., to their vectors of coefficients) in order to mix them and to hide their structure. This preserves the easy solvability of the modified system of equations $E'_i(x_1,...,x_k)=H_i(M)$ (mod n). Other and further objects and advantages of the present invention will be evident from the following detailed description taken in conjunction with the drawing.

## Detailed Description of a second Preferred Embodiment

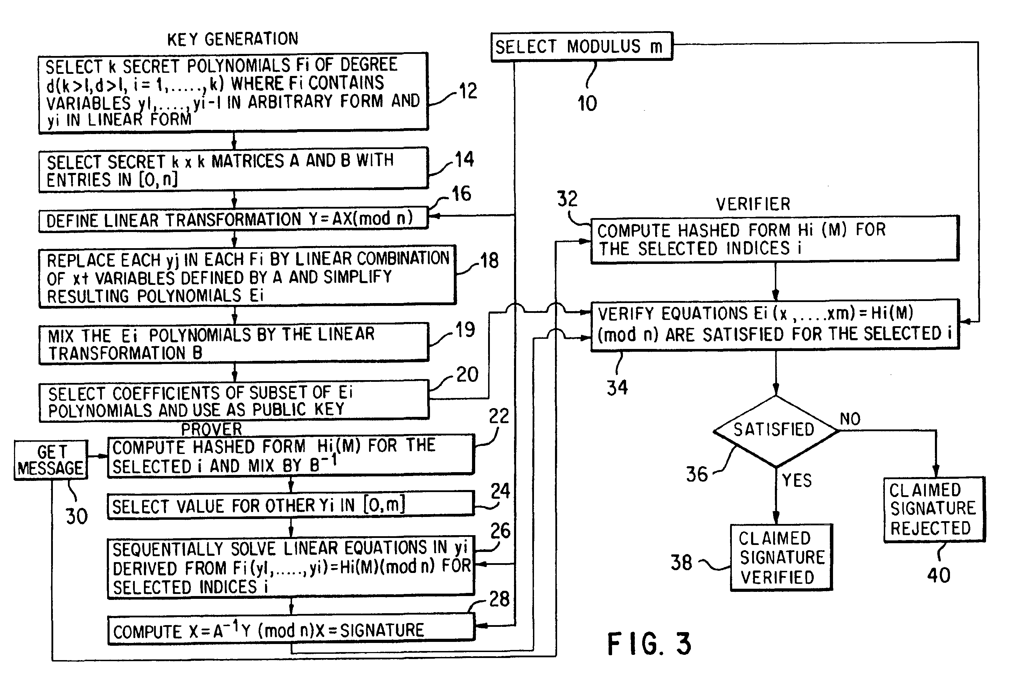

Figure 3 of the drawing illustrates a schematic showing of the second novel implementation of the signature scheme. Referring now to Figure 3, the basic structure of the method and apparatus of the present invention implementing the novel fast signature scheme based on sequentially linearized equations will now be described in detail. The description will be by reference to the various steps of the novel method, however, the apparatus employed to effect the various steps, will be evident as a means to carry out the prescribed function and known data processing equipment for these purposes will be readily apparent to those of ordinary skill in this art from the following elaboration of the invention.

The first part involves the generation of a public key. The first step is to select a public composite modulus n, and destroy its factorization as noted in block 10. Next, the user selects k secret polynomials $F_i$ of degree d (k>1, d>1, i=1,...,m), where $F_i$ contains the i-1 variables $y_1,...,y_{i-1}$ in an arbitrary form and the variable $y_i$ in a linear form as shown in block 12. The user than selects a secret kxk matrix A with entries in [O,n), block 14 and defines the linear transformation Y=AX (mod n), block 16. The user now replaces each $y_j$ in each $F_i$ by the linear combination of $x_t$ variables defined by A, and simplifies the resultant polynomials $E_i$, block 18. Finally, the user extracts the coefficients of all the $E_i$ polynomials for i=2,..., k and defines (publishes) them as the public key, block 20.

Signature generation is carried out in the following manner. Given the message M, block 30, the user computes its hashed forms $H_i$ (M) for i=2,...,k, block 22. The user chooses a value for $y_1$ in [O,n), block 24 and sequentially solves the linear equations in $y_i$ derived from $F_i(y_1,...,y_i)=H_i(M)$ (mod n) for i=2,...,k, block 26. The user, then computes $X=A^{-1}Y$ (mod n), and sends X as the signature of M, block 28.

Signature verification is carried out in the following manner. The message M, block 30, is transferred to block 32 where its hashed forms $H_i(M)$ for i=2,...k are computed. The signature X is transferred from block 28 and the public key is transferred from block 20 to block 34 where, the equations $E_i(x_1,...x_m)=H_i$ (M) (mod n) are verified as satisfied for i=2,...,k in decision 36. If YES, the signature is accepted in block 38; if NO, the signature is rejected in block 40.

The implementation outlined above can be demonstrated with the (totally insecure) modulus n=77:

The secret polynomials $F_1$, $F_2$ and $F_3$ are chosen as:

$$F_1(y_1)=y_1$$

$$F_2(y_1,y_2) = y_1{}^*y_2$$

$$F_3(y_1,y_2,y_3) = (4*y_1 + 3*y_2)*y_3 + (9*y_1*y_1 + 21*y_1*y_2 + 4*y_2*y_2)$$

The secret linear transformation A is chosen as:

$$y_1 = x_1 + x_2 + 3*x_3$$

$$y_2 = x_1 + 2*x_2 + x_3$$

$$y_3 = x_1 + x_2 + 4*x_3$$

By substituting these linear expressions into the Fi's and simplifying, the two quadratic expressions result:

$$E_1(x_1,x_2,x_3)= x_1 + x_2 + 3x_3$$

$$E_2(x_1,x_2,x_3) = 1*x_1*x_1+ 3*x_1*x_2+ 4*x_1*x_3+ 2*x_2*x_2+ 7*x_2*x_3+ 3*x_3*x_3 \qquad (\text{mod } 77)$$

$$E_3(x_1,x_2,x_3) = 41*x_1*x_1+37*x_1*x_2+35*x_1*x_3+0*x_2*x_2+41*x_2*x_3+ 54*x_3*x_3 \qquad (\text{mod } 77)$$

Expressions $E_2$ and $E_3$ are then mixed by

$$E'_2=2E_2 + 3E_3= 48*x_1*x_1+ 40*x_1*x_2 + 36*x_1*x_3 + 4x_2*x_2 + 60*x_2*x_3 + 91*x_3*x_3 \qquad (\text{mod } 77)$$

$$E'_2=2E_2 + 3E_3= 6*x_1*x_1 + 0*x_1*x_2 + 74*x_1*x_3 + 2*x_2*x_2 + 12*x_2*x_3 + 34*x_3*x_3 \qquad (\text{mod } 77).$$

These expressions are then published as the public key.

Although the invention has been shown and described in terms of specific preferred embodiments and variants, changes and modifications are possible which do not depart from the spirit, scope or contemplation of the inventive concepts disclosed and taught herein. Such are deemed to fall within the purview of the invention as claimed.

## Claims

1. A method of generating and verifying digital signatures comprising the steps of:

   a) selecting a birational mapping $(v_1,...,v_k)=f(x_1,...,x_k)$ comprising k>1 rational functions $v_1=f_i(x_1,...,v_k)$;
   b) selecting first $s(1\leq s<k)$ of $f_i$ functions and using them as a public key;
   c) maintaining inverse of f as a private key;
   d) generating a digital message M;
   e) computing $v_i=h(M,i)$ for i=1,...,s where h is a publicly known cryptographic hash function;
   f) selecting $v_i=r_i$ for i=s+1,...,k where $r_i$ is a randomly chosen value;
   g) computing signature $(x_1,...,x_k)$ using inverse of f to satisfy $(v_1,...,v_k) = f(x_1,...,x_k)$;
   h) transmitting to a verifier the digital message M, and the signature of step f); and
   i) verifying the signature of step f) of message M by computing $v_1=h(M,i)$ for i=1,...,s and checking that $v_1=f_i(x_1,...,x_k)$, where $f_1,...,f_s$ is the signer's public key.

2. The method of claim 1 wherein the $f_i$ functions of step a) are non-linear.

3. The method of claim 2 wherein the equations of step a) are modulo a large public n with secret factorization.

**4.** A method of generating and verifying digital signatures comprising the steps of:

  a) selecting a set F of rational functions in k>1 variables;
  b) selecting an algebraic basis G of F with the property that the representation of any f in F can be easily computed in terms of generators $g_i$ in G;
  c) selecting invertible algebraic transformations and maintaining them as a private key;
  d) transforming the easy basis G into a hard basis G";
  e) selecting a proper subset of $1 \leq s < k$ generators $g''_i$ in G as a public key;
  f) generating a digital message M;
  g) assigning to each $g''_i$ with $i \leq s$ the hashed value $v_1 = h(M,i)$ of M wherein h is a publicly known cryptographic hash function, and to each $g''_i$ with $i > s$ a random number $v_i = r_i$;
  h) expressing each $g_i$ in the easy basis G in terms of generators $g''_j$ in the hard basis using private key of step d);
  i) selecting the values $x_i$ of the easy generators of step i) as the signature X of M; and
  j) verifying the signature X by assigning the values $x_i$ from the signature to the easy generators $g_i$, computing values $v_1,...,v_s$ of the s hard generators $g''_j$ of step f), evaluating the s hashed forms of M using h of step h) and checking that $v_1 = h(M,i)$ for all $i = 1,...,s$.

**5.** The method of claim 4 wherein step c is carried out using invertible linear transformations.

**6.** The method of claim 5 wherein the computations are carried out modulo a large public n with secret factorization.

**7.** The method of claim 6 where F is the set $F_d[y_1,...,y_k]$ of homogeneous polynomials of degree d in k variables, and G is a set of monomials $y_1^{e1} y_2^{e2},...y_k^{ek}$ with $e_1 + e_2 + ... + e_k = d$ such that any other monomial in $F_d[y_1,...,y_k]$ can be generated by a sequence of multiplications and divisions.

**8.** The method of claim 7 where d=2 and G is either $\{y_1 y_2,...,y_{k-1} y_k, y_k y_1\}$ for odd k or $\{y_1^2, y_1 y_1,...,y_{k-1} y_k\}$ for arbitrary k.

**9.** A method of generating and verifying digital signatures comprising the steps of:

  a) selecting a modulus n,
  b) selecting k secret polynomials $F_i$ of degree d (k>1, d>1) where $F_i$ contains variables $y_1,...,y_{i-1}$ in arbitrary form and $y_i$ in linear form,
  c) selecting two secret kxk matrices A and B with entries in [O,n),
  d) defining a linear transformation Y=AX (mod n),
  e) replacing each $y_i$ in each $F_i$ by the linear combination of $x_t$ variables defined by A and simplifying the resulting polynomials $E_i$,
  f) mixing the k $E_i$ polynomials by the linear transformation B,
  g) selecting the coefficients of a proper subset of s<k $E_i$ polynomials and using them as a public key,
  h) generating a message M, and computing the hashed form $H_i(M)$ for the selected indices i, and applying to them the inverse linear transformation $B^{-1}$,
  i) selecting arbitrary values for the $y_i$'s,
  j) sequentially solving the linear equations in $y_i$ derived from $F_i (y_1,.....,y_i) = H_i(M)(mod\ n)$ for the selected indices i,
  k) computing $X = A^{-1}Y$ (mod n) to derive a signature X of message M,
  l) transmitting to a verifier the modulus n of step a, the public key of step g, the message M of step h and the signature X of step k, and
  m) verifying the signature X of the message M by computing the hashed form $H_i(M)$ for all the selected indices i, and verifying that equations $E_i(x_1,....,x_m) = H_i(M)(mod\ n)$ are satisfied.

**10.** Apparatus for generating and verifying digital signatures comprising

  a) means for selecting a birational mapping $(v_1,...,v_k) = f(x_1,...,x_k)$ comprising k>1 rational functions $v_1 = f_i(x_1,...,v_k)$;
  b) means for selecting first $1 \leq s < k$ of $f_i$ functions and using them as a public key;
  c) means for generating a digital message M;
  d) means for computing $v_i = h(M,i)$ for $i = 1,...,s$ where h is a publicly known cryptographic hash function;
  e) means for selecting $v_i = ri$ for $i = s+1,...,k$;
  f) means for computing signature $(x_1,...,x_k)$ using inverse of f to satisfy $(v_1,...,v_k) = f(x_1,...,x_k)$;

g) means for transmitting to a verifier the digital message M, the public key of b) and the signature of f); and

h) means for verifying the signature of f) of message M by computing $v_1=h(M,i)$ for i=1,...,s and checking that $v_1=f_i(x_1,...,x_k)$.

**11.** The apparatus of claim 10 wherein the fi functions of a) are non-linear.

**12.** The apparatus of claim 11 wherein the equations of a) are modulo a large public n with secret factorization.

**13.** Apparatus for generating and verifying digital signatures comprising:

a) means for selecting a set F of rational functions in k>1 variables;

b) means for selecting an algebraic basis G of F with the property that the representation of any f in F can be easily computed in terms of generators $g_i$ in G;

c) means for selecting invertible algebraic transformation and maintaining them as a private key;

d) means for transforming the easy basis G into a hard basis G";

e) means for selecting a proper subset of s generators $g''_i$ in G as a public key;

f) means for generating a digital message M;

g) means for assigning to each $g''_i$ with i≤s the hashed value $v_i=h(M,i)$ of M wherein h is a publicly known cryptographic hash function, and to each $g''_i$ with i>s a random number $v_i=n_i$;

h) means for expressing each $g_i$ in the easy basis G in terms of generators $g''_j$ in the hard basis using the private key of d);

i) means for selecting the values $x_i$ of the easy generators of i) as signature X of M; and

j) means for verifying the signature X by assigning the values $x_i$ from the signature to the easy generators $g_i$, computing $v_1,...,v_s$ of the S hard generators $g''_j$ of f), evaluating the S hashed forms of M using h of step h) and checking that $v_1=h(M,i)$ for all i=1,...,s.

**14.** Apparatus of claim 13 wherein the means of c) or d) carries out its function using invertible linear transformations.

**15.** Apparatus of claim 14 wherein the computations are carried out modulo a large public n with secret factorization.

**16.** Apparatus for generating and verifying digital signatures comprising:

i) means for establishing a modulus n, a public key, a message M and a signature X through encryption to enable signature X to be uniquely verifiable including

a) selecting a modulus n,

b) selecting k secret polynomials $F_i$ of degree d (k>1,d>1) where $F_i$ contains variables $y_1,....,y_{i-1}$ in arbitrary form and $y_i$ in linear form,

c) selecting two secret kxk matrices A and B with entries in [O,n),

d) defining a linear transformation Y=AX (mod n),

e) replacing each $y_i$ in each $F_i$ by the linear combination of $x_t$ variables defined by A and simplifying the resulting polynomials $E_i$,

f) mixing the k $E_i$ polynomials by the linear transformation B,

g) selecting the coefficients of a proper subset of s<k $E_i$ polynomials and using them as a public key,

h) generating a message M, and computing the hashed form $H_i(M)$ for the selected indices i, and applying to them the inverse linear transformation $B^{-1}$,

i) selecting arbitrary values for the $y_i$'s,

j) sequentially solving the linear equations in $y_i$ derived from $F_i (y_1,...,y_i) = H_i(M)$(mod n) for the selected indices i,

k) computing $X=A^{-1}Y$ (mod n) to derive a signature X of message M,

ii) means for transmitting to a verifier the modulus n, the public key, the message M, and the signature X to submit same for verification of the signature X, and

iii) means for receiving and verifying the signature X of the message M by computing the hashed form $H_i(M)$ for all the selected indices i, and verifying that equations $E_i(x_1,....,x_m) = H_i(M)$(mod n) are satisfied to prove the verification of signature X.

**EP 0 597 481 B1**

**Patentansprüche**

1.  Verfahren für das Generieren und Verifizieren digitaler Signaturen, welches Verfahren folgende Schritte umfaßt:

    a) Auswahl eines birationalen Mapping $(v_1,...,v_k)=f(x_1,...,x_k)$, welches k>1 rationale Funktionen $v_1=f_i(x_1,...,v_k)$ umfaßt;

    b) Auswahl erster $s(1 \leq s < k)$ von $f_i$ Funktionen und deren Einsatz als öffentlicher Schlüssel;

    c) Aufrechterhaltung des Kehrwertes von f als Privatschlüssel;

    d) Generieren einer digitalen Nachricht M;

    e) Berechnen $v_i=h(M,i)$ für i=1,...,s, wobei h eine öffentlich bekannte kryptographische Kontrollfunktion ist;

    f) Auswahl von $V_i=r_i$ für i=s+1,...,k, wobei $r_i$ ein zufällig gewählter Wert ist;

    g) Berechnung der Signatur $(x_1,...,x_k)$ unter Verwendung des Kehrwerts von f, um $(v_1,...,v_k) = f(x_1,...,x_k)$ zu genügen;

    h) Übertragung der digitalen Nachricht M und der Signatur nach Schritt f) an eine Kontrollvorrichtung; und

    i) Verifizieren der Signatur nach Schritt f) der Nachricht M durch Berechnen von $(v_1=h(M,i)$ für i=1,...,s und Überprüfen, daß $v_1=f_i(x_1,...,x_k)$, wobei $f_1,...,f_s$ der öffentliche Schlüssel des Unterzeichners ist.

2.  Verfahren nach Anspruch 1, wobei die $f_i$ Funktionen des Schritts a) nicht-linear sind.

3.  Verfahren nach Anspruch 2, wobei die Gleichungen nach Schritt a) Moduloprüfungen mit einem großen öffentlichen n mit geheimer Faktorenzerlegung sind.

4.  Verfahren für das Generieren und Verifizieren digitaler Signaturen, welches Verfahren folgende Schritte umfaßt:

    a) Auswahl einer Menge F von rationalen Funktionen mit k>1-Variablen;

    b) Auswahl einer algebraischen Basis G von F mit der Eigenschaft, daß die Darstellung eines beliebigen f in F bequem in Form von Generatoren $g_i$ in G berechnet werden kann;

    c) Auswahl umkehrbarer algebraischer Umwandlungen und Aufrechterhaltung derselben als privater Schlüssel;

    d) Umwandeln der leichten Basis G in eine schwierige Basis G";

    e) Auswahl einer entsprechenden Teilmenge von $1 \leq s < k$-Generatoren g" in G als öffentlicher Schlüssel;

    f) Generieren einer digitalen Nachricht M;

    g) Zuordnung zu jedem $g"_i$ mit i≤s dem kontrollierten Wert $v_1=h(M,i)$ von M, wobei h eine öffentlich bekannte kryptographische Kontrollfunktion ist, und zu jedem $g"_i$ mit i>s eine zufällig gewählte Zahl $v_i=r_i$;

    h) Ausdrücken jedes $g_i$ in der leichten Basis G in Form von Generatoren $g"_j$ in der schwierigen Basis unter Verwendung des privaten Schlüssels von Schritt d) ;

    i) Auswahl der Werte $x_i$ der leichten Generatoren des Schrittes i) als Signatur X von M; und

    j) Überprüfen der Signatur X durch Zuordnen der Werte $x_i$ aus der Signatur zu den leichten Generatoren $g_i$, Berechnen der Werte $v_1,...,v_s$ der s schwierigen Generatoren $g"_j$ des Schrittes f), Evaluieren der s-kontrollierten Formen von M unter Verwendung von h des Schrittes h) und Überprüfen, daß $v_1=h(M,i)$ für alle i=1,...,s.

**5.** Verfahren nach Anspruch 4, wobei Schritt c unter Verwendung umkehrbarer linearer Umwandlungen ausgeführt wird.

**6.** Verfahren nach Anspruch 5, wobei die Berechnungen durch Moduloprüfungen mit einem großen öffentlichen n mit geheimer Faktorenzerlegung ausgeführt werden.

**7.** Verfahren nach Anspruch 6, wobei f die Teilmenge $F_d[y_1,...,y_k]$ homogener Polynome des Grades d in k-Variablen ist und G eine Teilmenge Monome $y_1{}^{e1}y_2{}^{e2},...y_k{}^{ek}$ mit $e_1+e_2+...+e_k=d$, so daß ein beliebiges anderes Monom in $F_d[y_1,...,y_k]$ durch eine Abfolge von Multiplikationen und Divisionen generiert werden kann.

**8.** Verfahren nach Anspruch 7, wobei d=2 und G entweder $\{y_1y_2,...,y_{k-1}y_k,y_ky_1\}$ für ungerade k oder $\{y_1{}^2, y_1y_1,..., y_{k-1}y_k\}$ für willkürliche k ist.

**9.** Verfahren für das Generieren und Verifizieren digitaler Signaturen, welches Verfahren folgende Schritte umfaßt:

a) Auswahl eines modulo n;

b) Auswahl von k geheimen Polynomen $F_i$ des Grades d (k>1,d>1), wobei $F_i$ die Variablen $y_1,....,y_{i-1}$ in willkürlicher Form und $y_i$ in linearer Form enthält,

c) Auswahl zweier geheimer kxk-Matrizen A und B mit Eingängen in [O,n] ;

d) Definition einer linearen Umwandlung Y=AX (mod n);

e) Ersetzen jedes $y_i$ in jedem $F_i$ durch die Linearkombination von durch A definierte $x_t$-Variablen und Vereinfachen der daraus resultierenden Polynome $E_i$;

f) Mischen der k $E_i$-Polynome durch die lineare Umwandlung B;

g) Auswahl der Koeffizienten einer entsprechenden Teilmenge von s<k $E_i$-Polynomen und Verwendung derselben als öffentlicher Schlüssel;

h) Generieren einer Nachricht M und Berechnen der kontrollierten Form $H_i(M)$ für die ausgewählten Indizes i und Anwendung der linearen Umkehrumwandlung $B^{-1}$ auf diese;

i) Auswahl willkürlicher Werte für die $y_i$;

j) sequentielles Lösen der von $F_i (y_1,.....,y_i) = H_i(M)(mod\ n)$ abgeleiteten linearen Gleichungen nach $y_i$ für die gewählten Indizes i;

k) Berechnen $X=A^{-1}Y$ (mod n) zur Ableitung einer Signatur X der Nachricht M;

l) Übertragen an eine Kontrollvorrichtung des modulo n des Schrittes a, des öffentlichen Schlüssels des Schrittes g, der Nachricht M des Schrittes h und der Signatur X des Schrittes k; und

m) Verifizieren der Signatur X der Nachricht M durch Berechnen der kontrollierten Form $H_i(M)$ für sämtliche ausgewählten Indizes i und Verifizieren, daß die Gleichungen $E_i(x_1,....,x_m) = H_i(M)(mod\ n)$ erfüllt sind.

**10.** Vorrichtung für das Generieren und Verifizieren digitaler Signaturen, welche Vorrichtung umfaßt:

a) Mittel für die Auswahl eines birationalen Mapping $(v_1,...,v_k)=f(x_1,...,x_k)$ welches k>1 rationale Funktionen $v_1=f_i(x_1,...,v_k)$ umfaßt;

b) Mittel für die Auswahl erster $s(1{\leq}s<k)$ von $f_i$ Funktionen und deren Einsatz als öffentlicher Schlüssel;

c) Mittel für das Generieren einer digitalen Nachricht M;

d) Mittel für das Berechnen von $v_i=h(M,i)$ für i=1,...,s, wobei h eine öffentliche bekannte kryptographische Kontrollfunktion ist;

e) Mittel für die Auswahl von $v_i=r_i$ für i=s+1,...,k;

f) Mittel für die Berechnung der Signatur $(x_1,...,x_k)$ unter Verwendung des Kehrwerts von f, um $(v_1,...,v_k) = f(x_1,...,x_k)$ zu genügen;

g) Mittel für die Übertragung der digitalen Nachricht M, des öffentlichen Schlüssels von b) und der Signatur von f) an eine Kontrollvorrichtung; und

h) Mittel für das Verifizieren der Signatur von f) der Nachricht M durch Berechnen von $v_1=h(M,i)$ für i=1,...,s und Überprüfen, daß $v_1=f_i(x_1,...,x_k)$ ist.

11. Vorrichtung nach Anspruch 10, wobei die $f_i$ Funktionen von a) nicht-linear sind.

12. Vorrichtung nach Anspruch 11, wobei die Gleichungen von a) Moduloprüfungen mit einem großen öffentlichen n mit geheimer Faktorenzerlegung sind.

13. Vorrichtung für die Generierung und Verifizierung digitaler Signaturen, welche Vorrichtung umfaßt:

a) Mittel für die Auswahl einer Menge F von rationalen Funktionen mit k>1-Variablen;

b) Mittel für die Auswahl einer algebraischen Basis G von F mit der Eigenschaft, daß die Darstellung eines beliebigen f in F bequem in Form von Generatoren $g_i$ in G berechnet werden kann;

c) Mittel für die Auswahl umkehrbarer algebraischer Umwandlungen und Aufrechterhaltung derselben als privater Schlüssel;

d) Mittel für das Umwandeln der leichten Basis G in eine schwierige Basis G";

e) Mittel zur Auswahl einer entsprechenden Teilmenge von s-Generatoren $g''_i$ in G als öffentlicher Schlüssel;

f) Mittel zum Generieren einer digitalen Nachricht M;

g) Mittel zur Zuordnung zu jedem $g''_i$ mit i≤s dem kontrollierten Wert $v_i=h(M,i)$ von M, wobei h eine öffentlich bekannte kryptographische Kontrollfunktion ist, und zu jedem $g''_i$ mit i>s eine zufällig gewählte Zahl $v_i=n_i$;

h) Mittel zum Ausdrücken jedes $g_i$ in der leichten Basis G in Form von Generatoren $g''_j$ in der schwierigen Basis unter Verwendung des privaten Schlüssels von Schritt d);

i) Mittel zur Auswahl der Werte $x_i$ der leichten Generatoren von i) als Signatur X von M; und

j) Mittel zum Verifizieren der Signatur X durch Zuordnen der Werte $x_i$ aus der Signatur zu den leichten Generatoren $g_i$, Berechnen der Werte $v_1,...,v_s$ der S schwierigen Generatoren $g''_j$ von f), Evaluieren der S-kontrollierten Formen von M unter Verwendung von h des Schrittes h) und Überprüfen, daß $v_1=h(M,i)$ für alle i=1,...,s.

14. Vorrichtung nach Anspruch 13, wobei das Mittel von c) oder d) seine Funktion unter Verwendung von umkehrbaren linearen Umwandlungen ausführt.

15. Vorrichtung nach Anspruch 14, wobei die Berechnungen durch Moduloprüfungen mit einem großen öffentlichen n mit geheimer Faktorenzerlegung ausgeführt werden.

16. Vorrichtung für das Generieren und Verifizieren digitaler Signaturen, welche Vorrichtung umfaßt:

i) Mittel zur Herstellung eines modulo n, eines öffentlichen Schlüssels, einer Nachricht M und einer Signatur X durch Verschlüsselung, um es zu ermöglichen, daß die Signatur X in einzigartiger Weise verifizierbar ist, welches Mittel umfaßt:

a) Auswahl eines modulo n;

b) Auswahl von k geheimen Polynomen $F_i$ des Grades d (k>1,d>1) , wobei $F_i$ die Variablen $y_1,....,y_{i-1}$ in willkürlicher Form und $y_i$ in linearer Form enthält,

c) Auswahl zweier geheimer kxk-Matrizen A und B mit Eingängen in [O,n);

d) Definition einer linearen Umwandlung Y=AX (mod n);

e) Ersetzen jedes $y_i$ in jedem $F_i$ durch die Linearkombination von durch A definierte $x_t$-Variablen und Vereinfachen der daraus resultierenden Polynome $E_i$;

f) Mischen der k $E_i$-Polynome durch die lineare Umwandlung B;

g) Auswahl der Koeffizienten einer entsprechenden Teilmenge von s<k $E_i$-Polynomen und Verwendung derselben als öffentlichen Schlüssel;

h) Generieren einer Nachricht M und Berechnen der kontrollierten Form $H_i(M)$ für die ausgewählten Indizes i und Anwendung der linearen Umkehrumwandlung $B^{-1}$ auf diese;

i) Auswahl willkürlicher Werte für die $y_i$;

j) sequentielles Lösen der von $F_i (y_1,......,y_i)$ = $H_i(M)$(mod n) abgeleiteten linearen Gleichungen nach $y_i$ für die gewählten Indizes i;

k) . Berechnen X=$A^{-1}$Y (mod n) zur Ableitung einer Signatur X der Nachricht M;

ii) Mittel für die Übermittlung des modulo n, des öffentlichen Schlüssels, der Nachricht M und der Signatur X an eine Kontrollvorrichtung, um diese zwecks Verifizierung der Signatur X vorzulegen; und

iii) Mittel für das Erhalten und Verifizieren der Signatur X der Nachricht M durch Berechnen der kontrollierten Form $H_i(M)$ für sämtliche ausgewählten Indizes i und Verifizieren, daß die Gleichungen $E_i(x_1,....,x_m)$ = $H_i(M)$ (mod n) erfüllt sind, um die Verifikation der Signatur X nachzuweisen.

## Revendications

1. Procédé pour produire et vérifier des signatures numériques, comprenant les étapes consistant à :

   a) sélectionner une mise en correspondance bidirectionnelle $(v_1,...,v_k)$=$f(x_1,...,x_k)$ comprenant k>1 fonctions rationnelles $v_1$=$f_i(v_1,...,v_k)$;
   b) sélectionner s ($1 \leq s \leq k$) premières de $f_i$ fonctions et les utiliser en tant que code public;
   c) conserver l'inverse de f en tant que code privé;
   d) produire un message numérique M;
   e) calculer $v_i$=h(M,i) pour i=1,...,s, h étant une fonction de hachage cryptographique connue de façon publique;
   f) sélectionner $v_i$=$r_i$ pour i=s+1,...,k, $r_i$ étant une valeur choisie de façon aléatoire;
   g) calculer la signature $(x_1,...,x_k)$ en utilisant l'inverse de f pour satisfaire à $(v_1,...,v_k)$ = $f(x_1,...,x_k)$;
   h) transmettre le message numérique M et la signature de l'étape f) à un vérificateur; et
   i) vérifier la signature de l'étape f) du message M par calcul de $v_1$=h(M,i) pour i = 1,...,s et vérifier que l'on a $v_1$=$f_i(x_1,...,x_k)$, $f_1,...,f_s$ étant le code public du signataire.

2. Procédé selon la revendication 1, selon lequel les $f_i$ fonctions de l'étape a) sont non linéaires.

3. Procédé selon la revendication 2, dans lequel les équations de l'étape a) sont modulo un public étendu n avec factorisation secrète.

4. Procédé de production et de vérification de signatures numériques comprenant les étapes consistant à :

a) sélectionner un ensemble F de fonctions rationnelles dans k>1 variables;

b) sélectionner une base algébrique G de F avec la propriété de la représentation de n'importe lequel de f dans F peut être aisément calculé en termes de générateurs $g_i$ dans G;

c) sélectionner des transformations algébriques réversibles et les conserver en tant que code privé;

d) transformer la base classique G en une base dure G";

e) sélectionner un sous-ensemble propre de 1≤s≤k générateurs G"$_i$ dans G en tant que code public;

f) produire un message numérique M;

g) affecter à chaque g"$_i$ avec i≤s la valeur hachée $v_1=h(M,i)$ de M et affecter à chaque g"$_i$ avec i>s un nombre aléatoire $v_i=r_i$;

h) exprimer chaque $g_i$ dans la base aisée G en termes de générateurs g"$_j$ dans la base dure en utilisant un code privé de l'étape d);

i) sélectionner des valeurs $x_i$ des générateurs aisés de l'étape i) en tant que signature X de M; et

j) vérifier la signature x en affectant les valeurs $x_i$ de la signature aux générateurs aisés $g_i$, calcul de valeurs $v_1,...,v_s$ des s générateurs durs g"j de l'étape f), évaluer s formes hachées de M en utilisant h de l'étape h) et vérifier si l'on a $v_1=h(M,i)$ pour tous les i=1,...,s.

5. Procédé selon la revendication 4, selon lequel l'étape c est exécutée en utilisant des transformations linéaires réversibles.

6. Procédé selon la revendication 5, selon lequel les calculs sont exécutés modulo une valeur n publique élevée avec une factorisation secrète.

7. Procédé selon la revendication 6, dans lequel F est l'ensemble $F_d[y_1,...,y_k]$ de polynômes homogènes de degré d dans k variables, et G est un ensemble de polynômes $y_1^{e_1}y_2^{e_2},...y_k^{e_k}$ avec $e_1+e_2+...+e_k=d$, de sorte que l'on peut produire n'importe quel autre monôme dans $F_d[y_1,...,y_k]$ au moyen d'une séquence de multiplications et de divisions.

8. Procédé selon la revendication 7, dans lequel d=2 et G est soit $\{y_1y_2,...,y_{k-1}y_k,y_ky_1\}$ pour k impair, soit $\{y_1^2,y_1y_1,...,y_{k-1}y_k\}$ pour k quelconque.

9. Procédé pour produire et vérifier des signatures numériques comprenant les étapes consistant à :

a) sélectionner un module n,

b) sélectionner k polynômes secrets $F_i$ de degré d (k>1, d>1), $F_i$ contenant des variables $y_1,...,y_{i-1}$ sous une forme arbitraire et $y_i$ sous une forme linéaire,

c) sélectionner deux matrices secrètes kxk A et B comportant des entrées dans [O,n),

d) définir une transformation linéaire Y=AX (mod n),

e) remplacer chaque $y_i$ dans chaque $F_i$ par la combinaison linéaire de xt variables définies par A et en simplifiant les polynômes $E_i$ résultants,

f) mélanger les k polynômes $E_i$ au moyen de la transformation linéaire B,

g) sélectionner les coefficients d'un sous-ensemble correct de s<k polynômes $E_i$ et les utiliser en tant que code public,

h) produire un message M et calculer la forme hachée $H_i(M)$ pour les indices sélectionnés i et les appliquer à la transformation linéaire inverse $B^{-1}$,

i) sélectionner les valeurs arbitraires pour les $y_i$,

j) résoudre séquentiellement les équations linéaires dans $y_i$ dérivées de Fi $(y_1,...,y_i) = H_i(M)(mod\ n)$ pour les indices i sélectionnés,

k) calculer $X=A^{-1}Y$ (mod n) pour obtenir une signature X du message M,

l) transmettre à un vérificateur le module n de l'étape a, le code public de l'étape g, le message M de l'étape h et la signature X de l'étape k, et

m) vérifier la signature X du message M en calculant la forme hachée $H_i(M)$ pour tous les indices sélectionnés i, et vérifier que les équations $E_i(x_i,...,x_m) = H_i(M)(mod\ n)$ sont satisfaites.

10. Dispositif pour produire et vérifier des signatures numériques comprenant :

a) des moyens pour sélectionner une mise en correspondance bidirectionnelle $(v_1,...,v_k)=f(x_1,...,x_k)$ comprenant k>1 fonctions rationnelles $v_1=f_i(v_1,...,v_k)$;

b) des moyens pour sélectionner s (1≤s≤k) premières de $f_i$ fonctions et les utiliser en tant que codes publics;

c) des moyens pour conserver l'inverse de f en tant que code privé;

d) des moyens pour produire un message numérique M;

e) des moyens pour calculer $v_i=h(M,i)$ pour i=1,...,s, h étant une fonction de hachage cryptographique connue de façon publique;

f) des moyens pour sélectionner $v_i=r_i$ pou ri=s+1,...,k, $r_i$ étant une valeur choisie de façon aléatoire;

g) des moyens pour calculer la signature $(x_1,...,x_k)$ en utilisant l'inverse de f pour satisfaire à $(v_1,...,v_k) = f(x_1,...,x_k)$;

h) des moyens pour transmettre le message numérique M et la signature de l'étape f) à un vérificateur; et

i) des moyens pour vérifier la signature de l'étape f) du message M par calcul de $v_1=h(M,i)$ pour i = 1,...,s et vérifier que l'on a $v_1=f_i(x_1,...,x_k)$, $f_1,...,f_s$ étant le code public du signataire.

**11.** Dispositif selon la revendication 10, dans lequel les fonctions fi de a) sont non linéaires.

**12.** Dispositif selon la revendication 1, dans lequel les équations de a) sont modulo un nombre n public élevé avec factorisation secrète.

**13.** Dispositif pour produire et vérifier des signatures numériques comprenant :

a) des moyens pour sélectionner un ensemble F de fonctions rationnelles dans k>1 variables;

b) des moyens pour sélectionner une base algébrique G de F avec la propriété de la représentation de n'importe lequel de f dans F peut être aisément calculé en termes de générateurs $g_i$ dans G;

c) des moyens pour sélectionner des transformations algébriques réversibles et les conserver en tant que code privé;

d) des moyens pour transformer la base classique G en une base dure G'';

e) des moyens pour sélectionner un sous-ensemble propre de 1≤s≤k générateurs $G''_i$ dans G en tant que code public;

f) des moyens pour produire un message numérique M;

g) des moyens pour affecter à chaque $g''_i$ avec i≤s la valeur hachée $v_1=h(M,i)$ de M et affecter à chaque $g''_i$ avec i>s un nombre aléatoire $v_i=r_i$;

h) des moyens pour exprimer chaque $g_i$ dans la base aisée G en termes de générateurs $g''j$ dans la base dure en utilisant un code privé de l'étape d);

i) des moyens pour sélectionner des valeurs $x_i$ des générateurs aisés de l'étape i) en tant que signature X de M; et

j) des moyens pour vérifier la signature x en affectant les valeurs $x_i$ de la signature aux générateurs aisés $g_i$, calcul de valeurs $v_1,...,v_s$ des s générateurs durs $g''j$ de l'étape f), évaluer s formes hachées de M en utilisant h de l'étape h) et vérifier si l'on a $v_1=h(M,i)$ pour tous les i=1,...,s.

**14.** Dispositif selon la revendication 13, dans lequel les moyens de c) ou d) exécutent leur fonction en utilisant des transformations linéaires réversibles.

**15.** Dispositif selon la revendication 14, dans lequel les calculs sont exécutés modulo un nombre n public élevé avec factorisation secrète.

**16.** Dispositif pour produire et vérifier des signatures numériques, comprenant :

i) des moyens pour établir un module n, un code public, un message M et une signature X par cryptage pour autoriser une signature X devant pouvoir être vérifiée de façon unique, incluant

a) sélectionner un module n,

b) sélectionner k polynômes secrets $F_i$ de degré d (k>1, d>1), $F_i$ contenant des variables $y_1,...,y_{i-1}$ sous une forme arbitraire et $y_i$ sous une forme linéaire,

c) sélectionner deux matrices secrètes kxk A et B comportant des entrées dans [O,n],

d) définir une transformation linéaire Y=AX (mod n) ,

e) remplacer chaque $y_i$ dans chaque $F_i$ par la combinaison linéaire de $x_t$ variables définies par A et en simplifiant les polynômes $E_i$ résultants,

f) mélanger les k polynômes $E_i$ au moyen de la transformation linéaire B,

g) sélectionner les coefficients d'un sous-ensemble correct de s<k polynômes $E_i$ et les utiliser en tant que code public,

h) produire un message M et calculer la forme hachée $H_i(M)$ pour les indices sélectionnés i et les appliquer à la transformation linéaire inverse $V^{-1}$,

i) sélectionner les valeurs arbitraires pour les $y_i$,

j) résoudre séquentiellement les équations linéaires dans $y_i$ dérivées de $F_i(y_1,...,y_i) = H_i(M)(mod\ n)$ pour les indices i sélectionnés,

k) calculer $X = A^{-1}Y\ (mod\ n)$ pour obtenir une signature X du message M,

ii) des moyens pour transmettre à un vérificateur de module n, le code public, le message M et la signature X pour les soumettre à une vérification de la signature X, et

iii) des moyens pour recevoir et vérifier la signature X du message M par calcul de la forme hachée $H_i(M)$ pour tous les indices sélectionnés i et vérifier que les équations $E_i(x_1,...,x_m) = H_i(M)\ (mod\ n)$ sont satisfaites pour trouver la vérification de la signature X.

**KEY GENERATION**

CHOOSE A BIRATIONAL MAPPING $(v1,....,vk) = f(x1,.......,xk)$ CONSISTING OF k RATIONAL FUNCTIONS $vi = fi(x1,.......,xk)$

DESCRIBE FIRST $s(1 = < s < k)$ OF $fi$ FUNCTIONS AS PUBLIC KEY

KEEP INVERSE OF f AS PRIVATE KEY

**SIGNATURE GENERATION**

GENERATE DIGITAL MESSAGE M

COMPUTE $vi = h(M,i)$ FOR $i = 1,.....,s$

CHOOSE $vi = ri$ FOR $i = s+1,.....,k$
h = PUBLICLY KNOWN CRYTOGRAPHIC HASH FUNCTION
ri = NEWLY CHOSEN SECRET RANDOM VALUES

USING KNOWLEDGE OF SECRET $f^{-1}$ COMPUTE SIGNATURE $(x1,.....,xk)$ SATISFYING $(v1,.....,vk) = f(x1,.....,xk)$

STORE SIGNATURE

**SIGNATURE VERIFICATION**

COMPUTE $vi = h(M,i)$ FOR $i = 1,...,s$

CHECK $vi = fi(x1,....,xk)$

FIG. 1

EP 0 597 481 B1

EP 0 597 481 B1

SELECT SET F OF RATIONAL FUNCTIONS IN k VARIABLES

SELECT A STANDARD ALGEBRAIC BASIS G OF F WITH PROPERTY THAT REPRESENTATION OF ANY f IN F AS ALGEBRAIC EXPRESSION IN TERMS OF GENERATORS gi IN G EASILY COMPUTED

TRANSFORM EASY BASIS G INTO HARD BASIS G" USING RANDOMLY CHOSEN INVERTIBLE ALGEBRAIC TRANSFORMATION

PUBLISH PROPER SUBSET OF S GENERATORS g"i IN G AS PUBLIC KEY

KEEP AS SECRET KEY ALGEBRAIC TRANSFORMATIONS

GENERATE DIGITAL MESSAGE M

ASSIGN TO EACH g"i (FOR i<=s) HASHED VALUE vi = h(M,i) OF M FOR PUBLICLY AVAILABLE HASH FUNCTION h

ASSIGN TO EACH g"i (FOR i>s) NEWLY CHOSEN RANDOM NUMBER yi

USE SECRET ALGEBRAIC TRANSFORMATIONS TO EXPRESS EACH gi IN EASY BASIS G IN TERMS OF GENERATORS g"j IN HARD BASIS G"

SELECT VALUES xi OF EASY GENERATORS AS SIGNATURE X OF M

TRANSMIT MESSAGE M AND SIGNATURE X

SIGNATURE VERIFICATION

ASSIGN xi VALUES FROM SIGNATURE X TO EASY GENERATORS gi

COMPUTE vi,.....,vs VALUES OF S HARD GENERATORS g"i WHICH APPEAR IN PUBLIC KEY

EVALUATE S HASHED FOAMS OF M USING h PUBLICLY AVAILABLE HASH FUNCTION

ACCEPT VALIDITY OF SIGNATURE IF vi = h(M,i) FOR ALL i = I,....,S

FIG. 2

KEY GENERATION

SELECT MODULUS m — 10

SELECT k SECRET POLYNOMIALS Fi OF DEGREE d(k>l,d>l, i=1,.....,k) WHERE Fi CONTAINS VARIABLES yl,.....,yi-l IN ARBITRARY FORM AND yi IN LINEAR FORM — 12

SELECT SECRET k x k MATRICES A AND B WITH ENTRIES IN [0,n] — 14

DEFINE LINEAR TRANSFORMATION Y=AX(mod n) — 16

REPLACE EACH yj IN EACH Fi BY LINEAR COMBINATION OF xt VARIABLES DEFINED BY A AND SIMPLIFY RESULTING POLYNOMIALS Ei — 18

MIX THE Ei POLYNOMIALS BY THE LINEAR TRANSFORMATION B — 19

SELECT COEFFICIENTS OF SUBSET OF Ei POLYNOMIALS AND USE AS PUBLIC KEY — 20

PROVER

GET MESSAGE — 30

COMPUTE HASHED FORM Hi(M) FOR THE SELECTED i AND MIX BY B⁻¹ — 22

SELECT VALUE FOR OTHER Yi IN [0,m] — 24

SEQUENTIALLY SOLVE LINEAR EQUATIONS IN yi DERIVED FROM Fi(yl,.....,yi)=Hi(M)(mod n) FOR SELECTED INDICES i — 26

COMPUTE X=A⁻¹Y (mod n)X=SIGNATURE — 28

VERIFIER — 32

COMPUTE HASHED FORM Hi(M) FOR THE SELECTED INDICES i

VERIFY EQUATIONS Ei(x,....xm)=Hi(M) (mod n) ARE SATISFIED FOR THE SELECTED i — 34

SATISFIED — 36

NO

YES

CLAIMED SIGNATURE VERIFIED — 38

CLAIMED SIGNATURE REJECTED — 40

FIG. 3